(19) **Europäisches Patentamt**
**European Patent Office**
**Office européen des brevets**

(11) **EP 3 868 280 A1**

(12) **EUROPÄISCHE PATENTANMELDUNG**

(43) Veröffentlichungstag:
**25.08.2021 Patentblatt 2021/34**

(51) Int Cl.:
**A47L 15/42** *(2006.01)*      **D06F 39/00** *(2020.01)*

(21) Anmeldenummer: **21150359.4**

(22) Anmeldetag: **06.01.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **16.01.2020   DE 102020100899**
            **25.05.2020   DE 102020113878**

(71) Anmelder: **Miele & Cie. KG**
**33332 Gütersloh (DE)**

(72) Erfinder:
• **Wolf, Cornelius**
  **33739 Bielefeld (DE)**
• **Steinmeier, Ralph**
  **32052 Herford (DE)**
• **Kornfeld, André**
  **33378 Rheda-Wiedenbrück (DE)**
• **Dahms, Tobias**
  **30519 Hannover (DE)**
• **Chluba, Nils**
  **31688 Nienstädt (DE)**
• **Bertram, Andre**
  **33609 Bielefeld (DE)**
• **Schröder, Nils**
  **33611 Bielefeld (DE)**

(54) **WASSERFÜHRENDES HAUSHALTSGERÄT, INSBESONDERE GESCHIRRSPÜLMASCHINE**

(57)    Die Erfindung betrifft ein wasserführendes Haushaltsgerät, insbesondere Geschirrspülmaschine (1), mit einem einen Spülraum (4) bereitstellenden Spülbehälter (3) zur Aufnahme von zu reinigendem Spülgut (5) und einer Wärmepumpeneinrichtung (9), die einen Verdampfer (13), einen Verdichter (10), einen Verflüssiger (11), ein Expansionsorgan (12) und einen diese Baukomponenten (10, 11, 12, 13) strömungstechnisch miteinander verbindenden Strömungskreislauf (14) aufweist, wobei in dem Strömungskreislauf (14) ein Arbeitsmedium geführt ist, wobei das Expansionsorgan (12) ein elektronisches Expansionsventil (21) ist, das mit einer Regelungseinrichtung (20) zusammenwirkt, mittels der eine Überhitzung des Arbeitsmediums regelbar ist, wobei die Regelungseinrichtung (20) eine Messeinrichtung (27) aufweist, die drucksensorfrei ausgebildet ist und, insbesondere ausschließlich, über Temperatursensoren (24, 25, 26, 34, 35, 38) verfügt, wobei ein erster Temperatursensor (24) zur Erfassung der Verdampfereintrittstemperatur, ein zweiter Temperatursensor (25) zur Erfassung der Verdampferaustrittstemperatur und ein dritter Temperatursensor (26, 34, 35) zur Erfassung der Verflüssigereintrittstemperatur, der Verflüssigeraustrittstemperatur oder der Spülwassertemperatur vorgesehen ist.

Fig. 2

EP 3 868 280 A1

**Beschreibung**

Die Erfindung betrifft ein wasserführendes Haushaltsgerät, insbesondere eine Geschirrspülmaschine, mit einem einen Spülraum bereitstellenden Spülbehälter zur Aufnahme von zu reinigendem Spülgut und einer Wärmepumpeneinrichtung, die einen Verdampfer, einen Verdichter, einen Verflüssiger, ein Expansionsorgan und einen diese Baukomponenten strömungstechnisch miteinander verbindenden Strömungskreislauf aufweist, wobei in dem Strömungskreislauf ein Arbeitsmedium geführt ist.

Wasserführende Haushaltsgeräte wie zum Beispiel Waschmaschinen, Haushaltsgeschirrspülmaschinen, Reinigungs- und/oder Desinfektionsautomaten und/oder dergleichen sind aus dem Stand der Technik an sich gut bekannt, weshalb es eines gesonderten druckschriftlichen Nachweises an dieser Stelle nicht bedarf. Es sei deshalb auch nur beispielhaft auf die EP 2 682 039 A1 verwiesen, die ein gattungsgemäßes Haushaltsgerät in Form einer Geschirrspülmaschine offenbart.

Die aus der EP 2 682 039 A1 vorbekannte Geschirrspülmaschine verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sogenannten Spülflotte verfügt die Geschirrspülmaschine im Inneren des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die aus der EP 2 682 039 A1 vorbekannte Geschirrspülmaschine verfügt des Weiteren über eine Wärmepumpeneinrichtung, und zwar zu dem Zweck, den Energieverbrauch der Geschirrspülmaschine beim Aufheizen der Spülflotte zu reduzieren. Dies wird dadurch erreicht, dass mittels der Wärmepumpeneinrichtung ein erheblicher Wärmeanteil zur Spülflottenaufheizung aus der Umgebung in einen im bestimmungsgemäßen Verwendungsfall der Geschirrspülmaschine durchgeführten Spülprozess eingeleitet wird.

Die Wärmepumpeneinrichtung der Geschirrspülmaschine nach der EP 2 682 039 A1 ist eine Luft-Wasser-Wärmepumpeneinrichtung. Im Bedarfsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsluft, sondern einem Flüssigkeitsreservoir Wärmeenergie entzogen. Als Flüssigkeitsreservoir kann beispielsweise ein mit Wasser befüllter Wassertank dienen, der den Verdampfer der Wärmepumpeneinrichtung beherbergt. Im Betriebsfall kommt es infolge eines Wärmeenergieentzugs zu einer Abkühlung des im Tank bevorrateten Wassers, wobei eine Abkühlung des Wassers bis zur Vereisung vorgenommen werden kann.

Die Wärmepumpeneinrichtung nach der EP 2 682 039 A1 bzw. der EP 2 206 824 A2 verfügt in an sich bekannter Weise über einen Verdampfer, einen Verdichter, einen Verflüssiger, ein Expansionsorgan und einen diese Baukomponenten strömungstechnisch miteinander verbindenden Strömungskreislauf. Innerhalb des Strömungskreislaufs ist ein Arbeitsmedium, auch Kältemittel genannt, geführt. Im bestimmungsgemäßen Verwendungsfall der Wärmepumpeneinrichtung wird dem Arbeitsmedium mittels des Verflüssigers Wärme entzogen und auf die Spülflotte übertragen. Nach einem Durchströmen des Verflüssigers passiert das Arbeitsmedium das Expansionsorgan, infolge dessen das Arbeitsmedium auf ein niedrigeres Druckniveau gebracht wird. Da das Arbeitsmedium in diesem Zustand deutlich kälter als die Umgebungstemperatur ist, kann es im nachfolgenden Verdampfer Wärme aus der Umgebung aufnehmen, bevor es anschließend zum Verdichter und alsdann wieder zum Verflüssiger geführt wird.

Hinsichtlich der Ausgestaltung des Expansionsorgans sind grundsätzlich unterschiedliche Ausführungsformen denkbar. So können regelnde Expansionsorgane wie zum Beispiel elektronische Expansionsventile oder nicht regelnde Expansionsorgane wie zum Beispiel Kapillarrohre zum Einsatz kommen.

Regelnde Expansionsorgane regeln die Überhitzung des im Strömungskreislauf geführten Arbeitsmediums, und zwar in Durchströmungsichtung hinter dem Verdampfer, womit der Verdichter gezielt vor Flüssigkeitstropfen geschützt wird. Zudem wird hierdurch die Überhitzung auf einem bestimmten Niveau gehalten, womit der gesamte Wärmepumpenkreislauf insgesamt sehr effizient arbeitet. Nicht regelnde Expansionsorgane müssen hingegen auf den denkbar schlechtesten Betriebspunkt ausgelegt werden, um eine Betriebssicherheit zu gewährleisten, was den gesamten Wärmepumpenkreislauf insgesamt ineffizienter macht. Insofern ist der Einsatz regelnder Expansionsorgane bevorzugt.

Als regelndes Expansionsorgan kann etwa ein elektronisches Expansionsventil Verwendung finden. Dieses kann beispielsweise die Verdampferaustrittstemperatur und den Verdampferaustrittsdruck als Eingangsgrößen für die Regelung nutzen. Mit diesen Eingangsgrößen lässt sich die Überhitzungsregelung in optimierter Weise ansteuern, denn die Verdampferaustrittstemperatur entspricht im Moment der Überhitzung der Sauggastemperatur und über den Verdampferaustrittsdruck lässt sich die Verdampfungstemperatur bestimmen, wodurch die Überhitzung des Sauggases exakt ermittelt werden kann.

Eine derartige Konstruktion ist jedoch nicht frei von Nachteilen. So stellt der zur Bestimmung des Verdampferaustrittsdrucks benötigte Drucksensor einen Kostentreiber dar, der insgesamt zu erhöhten Herstellungs- und Montagekosten führt. Zudem ist von Nachteil, dass im Defektfall ein Austausch des Drucksensors nicht ohne vorheriges Ablassen des Arbeitsmediums aus dem Strömungskreislauf stattfinden kann, was einen hohen Reparaturaufwand mit sich bringt, wodurch ein solcher Defektfall zum Ausfall der gesamten Wärmepumpeneinrichtung führt.

Zur Überwindung dieser Nachteile ist es die **Aufgabe** der Erfindung, ein wasserführendes Haushaltsgerät der eingangs genannten Art dahingehend weiterzuentwickeln, dass eine in Herstellung und Montage kostengünstige Konstruktionsalternative gegeben ist, die zudem im Defektfall eine Reparatur in einfacher Weise ermöglicht.

Zur **Lösung** dieser Aufgabe wird mit der Erfindung ein Haushaltsgerät der eingangs genannten Art vorgeschlagen, das sich dadurch auszeichnet, dass das Expansionsorgan ein elektronisches Expansionsventil ist, das mit einer Regelungseinrichtung zusammenwirkt, mittels der eine Überhitzung des Arbeitsmediums regelbar ist, wobei die Regelungseinrichtung eine Messeinrichtung aufweist, die drucksensorfrei ausgebildet ist und, insbesondere ausschließlich, über Temperatursensoren verfügt, wobei ein erster Temperatursensor zur Erfassung der Verdampfereintrittstemperatur, ein zweiter Temperatursensor zur Erfassung der Verdampferaustrittstemperatur und ein dritter Temperatursensor zur Erfassung der Verflüssigereintrittstemperatur, der Verflüssigeraustrittstemperatur oder der Spülflüssigkeitstemperatur vorgesehen sind.

Erfindungsgemäß kommen somit ausschließlich Temperatursensoren zum Einsatz, die als Eingangsgrößen zur Regelung Ist-Temperaturen liefern. Es ist so eine kostengünstigere und auch robustere Alternative zur vorbeschriebenen gegeben. Zudem ist es im Reparaturfall in einfacher Weise möglich, defekte Temperatursensoren auszutauschen. Ein Ablassen des Arbeitsmediums aus dem Strömungskreislauf der Wärmepumpeneinrichtung ist jedenfalls nicht erforderlich, da die Temperatursensoren jeweils außen an den Stellen des Strömungskreislaufes angebracht sind, an denen Temperaturen überwacht werden sollen.

Zur Überwindung der vorbeschriebenen Nachteile finden ein elektronisches Expansionsventil und eine damit in Wirkverbindung stehende Regelungseinrichtung Verwendung. Dabei weist die Regelungseinrichtung eine Messeinrichtung auf, die drucksensorfrei ausgebildet ist. Erfindungsgemäß kommt mithin kein Drucksensor zum Einsatz. Die Messeinrichtung verfügt ausschließlich über Temperatursensoren, wobei wenigstens drei Temperatursensoren vorgesehen sind. Mittels dieser Temperatursensoren werden die Verdampfereintrittstemperatur sowie die Verdampferaustrittstemperatur erfasst. Des Weiteren wird eine Temperatur auf der Verflüssigungsseite des Strömungskreislaufes erfasst, und zwar wahlweise entweder die Verflüssigereintrittstemperatur, die Verflüssigeraustrittstemperatur oder die Spülwasser- bzw. Flottentemperatur. Mittels dieser drei erfassten Temperaturen findet dann eine Überhitzungsregelung statt, indem das elektronische Expansionsventil entsprechend nachgeführt wird.

Um eine Überhitzungsregelung nur mittels Temperatursensoren zu ermöglichen, ist als erste Eingangsgröße die Verdampferaustrittstemperatur zu erfassen. Hierzu dient der zweite Temperatursensor. Um die Größe der Überhitzung des Sauggases zu erhalten, ist ferner die Verdampfungstemperatur als zweite Eingangsgröße zu ermitteln. Diese lässt sich jedoch nicht außenseitig des Verdampfers mit einem Temperaturfühler messen, weshalb als Indiz für die Verdampfungstemperatur die Verdampfereintrittstemperatur erfasst wird. Dies geschieht mittels des ersten Temperatursensors.

Mit diesen durch die ersten beiden Temperatursensoren erfassten Ein- und Austrittstemperaturen am Verdampfer kann eine Überhitzungsregelung angesteuert werden. Da allerdings der Druckverlust im Verdampfer unberücksichtigt bleibt, fällt die reale Überhitzung jedoch größer als die eingestellte Soll-Überhitzung aus. Der Druckverlust im Verdampfer wird deshalb wie folgt in die Soll-Überhitzungsbestimmung mit einbezogen.

Der Verdampfereintrittsdruck ist durch Umrechnung der Verdampfereintrittstemperatur bekannt, da in Durchströmungsrichtung des Strömungskreislaufs hinter dem Expansionsventil das Arbeitsmedium als Nassdampf vorliegt und somit Druck und Temperatur einhergehen.

Der Druckverlust ergibt sich durch die Strömungswiderstände, die beim Durchfließen des Arbeitsmediums durch die Verdampfergeometrie entstehen. Diese Strömungswiderstände sind neben der Verdampfergeometrie abhängig von der jeweiligen Dichte des Arbeitsmediums und dessen Strömungsgeschwindigkeit. Da sich im bestimmungsgemäßen Betriebsfall der Wärmepumpeneinrichtung der Massenstrom des Arbeitsmittels ändert, bleibt der Druckverlust im Verdampfer im Verlaufe eines bestimmungsgemäßen Betriebs der Wärmepumpeneinrichtung nicht konstant.

Der Druckverlust sorgt für ein weiteres Absenken der Verdampfungstemperatur innerhalb des Verdampfers selbst. Von dieser niedrigsten Verdampfungstemperatur aus startet die Überhitzung des Arbeitsmittels. Dieser niedrigste Punkt der Verdampfungstemperatur kann weder am Verdampfereintritt, noch am Verdampferaustritt mittels eines Temperatursensors erfasst werden. Wird also direkt die Differenz zwischen Verdampferaustrittstemperatur und Verdampfereintrittstemperatur als gemessene Überhitzung gewählt, so fällt diese geringer aus als die reale Überhitzung, die sich aus der Verdampfungstemperatur unter Einbeziehung des fortlaufenden Druckverlustes bis zum Ende des Verdampfers ergibt.

Im Ergebnis fällt die reale Überhitzung also größer aus, als sie allein mit den beiden Temperatursensoren am Verdampfereintritt und am Verdampferaustritt erfasst werden kann. Eine zu große Überhitzung schützt zwar generell den Verdichter vor Flüssigkeitstropfen, allerdings wird dadurch die Nutzung des Verdampfers ineffizienter und der gesamte Betrieb der Wärmepumpeneinrichtung energetisch schlechter.

Um einen Betrieb der Wärmepumpeneinrichtung effizienter zu gestalten, wird erfindungsgemäß die Überhitzungsregelung mit Temperatursensoren so angesteuert, dass der Druckverlust im Verdampfer mitberücksichtigt wird, allerdings ohne direkte Druckmessung mittels eines Drucksensors. Zu diesem Zweck ist erfindungsgemäß eine Regelungseinrichtung vorgesehen, in der entsprechende Kennfeldwerte hinterlegt sind, welche den Druckverlust des Verdampfers anhand von gemessenen Ist-Temperaturen ermöglichen. Um auf den richtigen Wert aus den Kennfeldwerten zugreifen zu können, müssen indes aber Informationen über den jeweiligen Zustand der Wärmepumpeneinrichtung bzw. des davon durchgeführten Prozesses vorliegen. Hierfür reichen die beiden vom ersten und zweiten Temperatursensor im Betriebsfall erfassten Temperaturen, nämlich die Verdampfereintrittstemperatur und die Verdampferaustrittstemperatur nicht aus. Es ist deshalb erfindungsgemäß ein dritter Temperatursensor vorgesehen, der auf der Verflüssigungsseite vorgesehen ist, um den Zustand des von der Wärmepumpeneinrichtung durchgeführten Prozesses ausreichend genau erfassen zu können.

Der dritte Temperatursensor kann zu diesem Zweck vor oder vorzugsweise hinter dem Verflüssiger direkt am Strömungskreislauf angebracht sein, oder es wird als dritter Temperatursensor der im Sammeltopf einer Geschirrspülmaschine ohnehin vorhandene Temperatursensor genutzt. Im Ergebnis wird je nach Positionierung des dritten Temperatursensors entweder die Verflüssigereintrittstemperatur, die Verflüssigeraustrittstemperatur oder die Spülwassertemperatur erfasst und zur Auswahl eines Wertes aus den in der Regelungseinrichtung hinterlegten Kennfeldwerten genutzt.

Im Ergebnis dieser erfindungsgemäßen Ausgestaltung steht insgesamt, dass allein anhand von mittels entsprechender Temperatursensoren erfassten Temperaturen eine effektive Überhitzungsregelung stattfinden kann. Dabei kommt die zur Erfassung der Temperaturen eingesetzte Messeinrichtung ohne Drucksensor aus, da der im Verdampfer stattfindende Druckverlust auf Basis der gemessenen Temperaturen anhand von in der Regelungseinrichtung hinterlegten Kennfeldwerten ermittelt werden kann.

Gemäß einem weiteren Merkmal der Erfindung ist vorgesehen, dass die Messeinrichtung einen vierten Temperatursensor zur Erfassung der Verdampfertanktemperatur aufweist.

Um den Startzustand zu Beginn eines bestimmungsgemäßen Betriebs der Wärmepumpeneinrichtung besser erfassen zu können, wird mit einem vierten Temperatursensor die Verdampfertanktemperatur erfasst. Zu diesem Zweck ist ein vierter Temperatursensor vorgesehen, der als separater Temperatursensor beispielsweise innerhalb des Tanks des Verdampfers angeordnet sein kann.

Alternativ hierzu ist ein Temperatursensor vorgesehen, der als zweiter und als vierter Temperatursensor dient, mittels dem also die Verdampferaustrittstemperatur und die Verdampfertanktemperatur gleichermaßen erfassbar sind. Dabei wird durch ein und denselben Temperatursensor, der beispielsweise auf der Außenseite der den Verdampfer verlassenden Rohrleitung angebracht ist, die Wärmeleitung der Rohrleitung am Verdampferaustritt erfasst. In analoger Weise kann gemäß einer weiteren Alternative auch ein Temperatursensor vorgesehen sein werden, welcher eingangsseitig des Verdampfers angeordnet ist, und der als erster und als vierter Temperatursensor dient. Durch diesen sind somit die Verdampfereintrittstemperatur und die Verdampfertanktemperatur erfassbar. Um im Falle, dass ein einzelner Temperatursensor als zweiter und als vierter Temperatursensor oder aber als erster und als vierter Temperatursensor dient, die Störgrößen zu minimieren, sollte die zur Tanktemperaturmessung genutzte Rohrleitung zur vom Verdampfertank abgewandten Seite hinter dem Temperatursensor mit einer thermischen Entkopplung ausgestattet sein. Hierdurch werden thermische Störungen, zum Beispiel durch den Verdichter, abgehalten, so dass durch den Temperatursensor in den Stilstandzeiten der Wärmepumpeneinrichtung ein guter Rückschluss auf die Tanktemperatur gezogen werden kann. Durch diesen Aufbau lassen sich mit nur einem Sensor am Verdampferein - oder -austritt die Verdampfertanktemperatur zum Start eines bestimmungsgemäßen Betriebs der Wärmepumpeneinrichtung und die Verdampfereintritts- bzw. -austrittstemperatur während eines bestimmungsgemäßen Betriebs der Wärmepumpeneinrichtung erfassen.

Somit dienen gemäß einer bevorzugten Ausführungsform der Erfindung die Verdampfertanktemperatur zu Beginn eines Betriebs der Wärmepumpeneinrichtung und die Verdampfereintrittstemperatur, die Verdampferaustrittstemperatur und die Spülwassertemperatur während des Betriebs der Wärmepumpeneinrichtung als Eingangsgrößen der Überhitzungsregelung. Dabei können die Tanktemperatur und die Verdampferaustrittstemperatur mit ein und demselben Temperatursensor erfasst werden. Diese Eingangsgrößen werden in der Regelungseinrichtung verarbeitet, denn durch diese Eingangsgrößen lässt sich der Zustand des Betriebs der Wärmepumpeneinrichtung erfassen. Mit einem Abgleich zwischen den Eingangsgrößen, den hinterlegten Daten über den Druckverlust und der gewählten, bzw. vorgegebenen oder vorgebbaren Soll-Überhitzung kann eine Stellgröße berechnet und an das Stellglied übertragen werden, bei welchem Stellglied es sich beispielsweise um einen Verstellmotor für das elektronische Expansionsventil handelt.

Auf diese Weise kann eine insgesamt sehr genaue, kostengünstige und robuste Überhitzungsregelung erreicht werden, wobei lediglich Temperatursensoren und keinerlei Drucksensoren verwendet werden.

Es ist gemäß einem weiteren Merkmal der Erfindung vorgesehen, dass die Regelungseinrichtung eine Kalkulationseinrichtung aufweist, mittels welcher die Ist-Überhitzung (also die real vorliegende Überhitzung) des Arbeitsmedium und die zum Erreichen einer vorgegebenen Soll-Überhitzung des Arbeitsmedium einzustellende Stellgröße eines auf das elektronische Expansionsventil wirkenden Stellglieds kalkulierbar ist auf Basis der vorgegebenen Soll-Überhitzung sowie der mittels der Messeinrichtung erfassten Ist-Temperaturen und vorgebbaren Kennfeldwerten, wobei die Kennfeldwerte den Druckverlust des Verdampfers im bestimmungsgemäßen Betriebsfall repräsentieren.

Die Regelungseinrichtung nach der Erfindung verfügt mithin über eine Messeinrichtung und eine Kalkulationseinrichtung. Zur Messeinrichtung gehören die schon vorerläuterten Temperatursensoren, die der Temperaturerfassung dienen. Es sind dabei wenigstens drei Temperatursensoren vorgesehen, die als Eingangsgrößen die Verdampfertanktemperatur zu Beginn eines Betriebs der Wärmepumpeneinrichtung sowie die Verdampfereintrittstemperatur, die Verdampferaustrittstemperatur und die Spülwassertemperatur während eines Betriebs der Wärmepumpeneinrichtung erfassen.

Die Kalkulationseinrichtung dient dazu, auf Basis der ermittelten Ist-Temperaturen eine Stellgröße für das Stellglied zu bestimmen, um somit das elektronische Expansionsventil so anzusteuern, dass sich die vorgegebene Soll-Überhitzung des Arbeitsmedium einstellt. Dies geschieht unter Berücksichtigung des sich im Verdampfer während eines bestimmungsgemäßen Betriebs einstellenden Druckverlusts, der auf Basis von vorgebbaren Kennfeldwerten mittels der erfassten Ist-Temperaturen bestimmt wird. Im Ergebnis ermöglicht es die erfindungsgemäße Regelungseinrichtung, das elektronische Expansionsventil entsprechend nachzuführen.

Es ist gemäß einem weiteren Merkmal der Erfindung vorgesehen, dass mindestens einer der Temperatursensoren thermisch isoliert ist.

Im bestimmungsgemäßen Verwendungsfall einer gattungsgemäßen Geschirrspülmaschine wird ein Spülprozess durchlaufen, der eine Mehrzahl unterschiedlicher Spülschritte aufweist, die dem Säubern und Trocknen des Spülguts dienen. Hierzu gehören im Wesentlichen die aufeinander nachfolgenden Spülschritte des Vorspülens, des Reinigens, des Zwischenspülens, des Klarspülens und des Trocknens. Die Spülschritte des Reinigens und des Klarspülens umfassen jeweils Heizphasen, die dazu dienen, die im Spülraum befindliche Spülflotte auf ein bestimmtes Temperaturniveau anzuheben. Dies erfolgt unter bestimmungsgemäßer Verwendung der Wärmepumpeneinrichtung.

Da die Spülschritte des Reinigens und des Klarspülens nicht unmittelbar aufeinander nachfolgen, ist die Wärmepumpeneinrichtung nach einem Aufheizen der Spülflotte während des Reinigens abzuschalten und für ein Aufheizen der Spülflotte während des Klarspülens wieder anzuschalten. Im bestimmungsgemäßen Verwendungsfall der Geschirrspülmaschine wird die Wärmepumpeneinrichtung also nicht kontinuierlich betrieben, was in nachteiliger Weise zu einer ungewollten thermischen Belastung der Wärmepumpeneinrichtung führen kann. Diese thermische Belastung der Wärmepumpeneinrichtung kann dabei so weit gehen, dass die ordnungsgemäße Funktion der Wärmepumpeneinrichtung während des Durchlaufens eines Spülprozesses nicht sicher gewährleistet ist. Der eigentlich mit der Verwendung einer Wärmepumpeneinrichtung wünschenswerterweise zu erzielende Effekt der Energieeinsparung kann dann nicht mehr erreicht werden.

Die thermische Isolation des mindestens einen Temperatursensors bewirkt, dass dieser bei einer bestimmungsgemäßen Verwendung der Wärmepumpeneinrichtung insoweit thermisch unbeeinflusst bleibt, als dass ein sicherer Betrieb der Wärmepumpeneinrichtung gestattet ist, und dies auch nach einem Zwischenstillstand, das heißt bei einem Wiedereinschalten der Wärmepumpeneinrichtung nach einem vorhergehenden Ausschalten. Dabei sorgt die erfindungsgemäß vorgesehene thermische Isolierung des mindestens einen Temperatursensors dafür, dass durch thermische Wechselwirkungen zwischen den Wärmepumpenkomponenten in Stillstandszeiten der Wärmepumpeneinrichtung entstehende Falschmessungen vermieden werden. Die erfindungsgemäße Ausgestaltung stellt damit konstruktiv sicher, dass die Wärmepumpeneinrichtung unanfälliger gegenüber auch im bestimmungsgemäßen Betriebsfall der Wärmepumpeneinrichtung nicht vermeidbaren thermischen Belastungen ist. Im Ergebnis wird so in vorteilhafter Weise eine verbesserte Funktionssicherheit erreicht.

Gemäß einem weiteren Merkmal der Erfindung ist vorgesehen, dass eine vom Expansionsventil zum Verdampfer führende erste Rohrleitung des Strömungskreislaufes ein erstes thermisches Isolationselement aufweist.

Der die einzelnen Baukomponenten der Wärmepumpeneinrichtung strömungstechnisch miteinander verbindende Strömungskreislauf verfügt über einzelne Rohrleitungen, die jeweils von Baukomponente zu Baukomponente führen. Eine erste Rohrleitung ist zwischen dem Expansionsventil und dem Verdampfer angeordnet, so dass ein das Expansionsventil in Strömungsrichtung verlassende Arbeitsmedium zum Verdampfer geleitet wird. Es ist nun vorgesehen, dass diese erste Rohrleitung zwischen Expansionsventil und Verdampfer ein erstes thermisches Isolationselement aufweist. Damit ist eine thermische Entkopplung von Verdampfer und Expansionsventil geschaffen, womit insbesondere ein Wärmeeintrag von der warmen Verflüssigerseite über das Expansionsventil in den ersten, am Verdampfereintritt liegenden Temperatursensor minimiert ist. Durch diese thermische Entkopplung wird also sichergestellt, dass eine nicht zu große Erwärmung des Temperatursensors im bestimmungsgemäßen Verwendungsfall der Wärmepumpeneinrichtung stattfindet.

Gemäß einer besonders bevorzugten Bauform ist vorgesehen, dass das erste Isolationselement als Rohrabschnitt der ersten Rohrleitung ausgebildet ist. Gemäß dieser Weiterbildung der Erfindung ist also vorgesehen, dass die Rohrleitung selbst zumindest abschnittsweise als erstes Isolationselement ausgebildet ist. Es ist so in konstruktiv denkbar einfacher Weise eine thermische Isolation des ersten Temperatursensors gegeben.

Es ist gemäß einem weiteren Merkmal der Erfindung vorgesehen, dass die erste Rohrleitung aus einem ersten Material und das erste Isolationselement aus einem zweiten Material gebildet sind, wobei das zweite Material einen im Vergleich zum ersten Material geringeren Wärmeleitkoeffizienten aufweist. Eine Wärme- beziehungsweise Kältebrücke zwischen dem Expansionsventil auf der einen Seite und dem am Verdampfereintritt liegenden Temperatursensor auf der anderen Seite ist so konstruktiv unterbunden. Das zweite Material, das heißt das Material aus dem das erste Isolierelement gebildet ist, weist einen Wärmeleitkoeffizienten auf, der sehr viel geringer ist, als das Material, aus dem die erste Rohrleitung gebildet ist. Damit wirkt das Isolierelement als thermische Entkopplung, da von der ersten Rohrleitung transportierte Wärme aufgrund der Zwischenschaltung des ersten Isolationselements nur minimiert auf den ersten Temperatursensor am Verdampfereintritt übergehen kann.

Gemäß einem weiteren Merkmal der Erfindung ist vorgesehen, dass der Wärmeleitkoeffizient des zweiten Materials mindestens 4-mal, vorzugsweise mindestens 8-mal kleiner als der Wärmeleitkoeffizient des ersten Materials ist. Der Unterschied bzw. das Verhältnis zwischen den Wärmeleitkoeffizienten von erstem Material und zweitem Material weist mithin einen Faktor von mindestens 4, vorzugsweise mindestens 8 auf, insbesondere liegt der Faktor in einem Intervall von 4 bis 30, vorzugsweise in einem Intervall von 8 bis 25.

Bei dem ersten Material handelt es sich gemäß einem weiteren Merkmal der Erfindung vorzugsweise um Kupfer. Das zweite Material ist gemäß einem weiteren Merkmal der Erfindung bevorzugterweise Edelstahl, es kann aber auch Kunststoff sein.

Die Rohrleitungen eines Strömungskreislaufes einer aus dem Stand der Technik an sich vorbekannten Wärmepumpeneinrichtung bestehen typischerweise aus Kupfer. Dies insbesondere aus zwei Gründen. Zum einen kann Kupfer vergleichsweise einfach durch Löten verarbeitet werden und zum anderen lässt sich eine aus Kupfer gebildete Rohrleitung ohne Zerstörung derselben leicht biegen. Dies vereinfacht die Herstellung und Montage. Kupfer weist indes aber einen vergleichsweise hohen Wärmeleitkoeffizienten auf, so dass eine Wärmebrücke zwischen den strömungstechnisch benachbarten Baukomponenten der Wärmepumpeneinrichtung gegeben ist. Erfindungsgemäß ist nun vorgesehen, die Rohrleitung zwischen dem Expansionsventil und dem Verdampfer zumindest abschnittsweise aus Edelstahl oder Kunststoff zu bilden. Hierdurch wird eine thermische Entkopplung geschaffen, wodurch die schon vorerläuterten Vorteile erreicht sind. Dabei erweist sich die zumindest abschnittsweise Ausbildung der ersten Rohrleitung aus Edelstahl oder Kunststoff als ebenfalls einfach in der Herstellung. Zudem wird eine spätere Montage beziehungsweise Demontage der Wärmepumpeneinrichtung hierdurch nicht nachteilig beeinflusst.

Mit der erfindungsgemäßen Konstruktion wird im Ergebnis eine in der Herstellung und Handhabung auf einfache Weise umsetzbare thermische Isolation des ersten Temperatursensors am Verdampfereintritt dadurch erreicht, dass zumindest ein Teil der ersten Rohrleitung nicht aus Kupfer, sondern aus Edelstahl oder Kunststoff gebildet ist. Da Edelstahl wie auch Kunststoff ein im Unterschied zu Kupfer sehr viel niedrigeren Wärmeleitkoeffizienten aufweist, stellt der aus Edelstahl oder Kunststoff gebildete Abschnitt der Rohrleitung ein Isolierelement dar, das einen Wärmefluss von der Verflüssigerseite über das Expansionsventil zum ersten Temperatursensor am Verdampfereintrit minimiert.

Gemäß einem weiteren Merkmal der Erfindung ist vorgesehen, dass das Expansionsventil mit einem zweiten Temperatursensor zusammenwirkt, wobei der zweite Temperatursensor dem Verdampferaustritt zugeordnet ist und somit an einer vom Verdampfer zum Verdichter führenden zweiten Rohrleitung des Strömungskreislaufs des Arbeitsmedium angeordnet ist. Der zweite Temperatursensor ist mithin dem Verdampfer strömungstechnisch nachgeschaltet. Dabei ist der zweite Temperatursensor vorzugsweise außenseitig der zweiten Rohrleitung an der zweiten Rohrleitung angebracht.

Gemäß einem weiteren Merkmal der Erfindung ist vorgesehen, dass der am Verdampferaustritt angeordnete zweite Temperatursensor thermisch isoliert ist. Zu diesem Zweck ist vorgesehen, dass die zweite Rohrleitung ein, insbesondere zweites, thermisches Isolationselement aufweist. Der zweite Temperatursensor ist in Strömungsrichtung des Arbeitsmediums dem Verdampfer nachgeschaltet, das heißt dem in Strömungsrichtung dem Verdampfer nachfolgenden Verdichter vorgeschaltet. Der zweite Temperatursensor ist mittels des zwischen dem zweiten Temperatursensor und dem Verdichter angeordneten, insbesondere zweiten, thermischen Isolationselements vom Verdichter thermisch entkoppelt, womit insbesondere ein Wärmeeintrag ausgehend vom Verdichter in den zweiten Temperatursensor minimiert ist.

Es kann bereits ausreichen, wenn lediglich der am Verdampferaustritt angeordnete zweite Temperatursensor thermisch isoliert ist. Die gleichzeitige thermische Isolation des ersten und zweiten Temperatursensors am Verdampfereintritt und Verdampferaustritt erbringt eine noch weiter gesteigerte Funktionssicherheit der Wärmepumpeneinrichtung. Dabei dient das erste Isolationselement insbesondere dazu, einen Wärmeeintrag von der Verflüssigerseite und somit Spülflottenseite über die Rohrleitung und das Expansionsventil in den ersten Temperatursensor am Verdampfereintritt zu minimieren, wohingegen das zweite Isolationselement dazu dient, einen Wärmeeintrag ausgehend vom Verdichter in den zweiten Temperatursensor am Verdampferaustritt zu unterbinden. Das erste Isolationselement ist deshalb (in Strömungsrichtung des Arbeitsmedium) zwischen Verflüssiger und am Verdampfereintritt angeordnetem ersten Temperatursensor, etwa zwischen Verflüssiger und Expansionsventil oder zwischen Expansionsventil und am Verdampfereintritt angeordnetem ersten Temperatursensor angeordnet, wohingegen das zweite Isolationselement zwischen am Verdampferaustritt angeordnetem zweiten Temperatursensor und Verdichter angeordnet ist.

Das zweite Isolationselement kann ebenso wie für das erste Isolationselement beschrieben als Rohrabschnitt ausgebildet sein und zwar als Rohrabschnitt der zweiten Rohrleitung. Dabei besteht die zweite Rohrleitung aus einem ersten Material wie beispielsweise Kupfer und das zweite Isolationselement besteht aus einem zweiten Material, beispielsweise Edelstahl oder Kunststoff, womit das zweite Material einen im Vergleich zum ersten Material geringeren Wärmeleitkoeffizienten aufweist. Hinsichtlich des zweiten Isolationselements werden damit die schon vorstehend zum ersten Isolationselement aufgeführten Vorteile erreicht. Insbesondere ist vorgesehen, dass der Wärmeleitkoeffizient des zweiten Materials mindestens 4-mal, vorzugsweise mindestens 8-mal kleiner als der Wärmeleitkoeffizient des ersten Materials ist. Der Unterschied zwischen den (bzw. Verhältnis der) Wärmeleitkoeffizienten von erstem Material und zweitem Material weist mithin einen Faktor von mindestens 4, vorzugsweise mindestens 8 auf, insbesondere liegt der Faktor in einem Intervall von 4 bis 30, vorzugsweise in einem Intervall von 8 bis 25.

Die vorbeschriebene thermische Isolierung von erster und zweiter Rohrleitung erbringt zudem den synergetischen Effekt, dass eine Temperaturerfassung mittels der erfindungsgemäß vorgesehenen Temperatursensoren von etwaigen Störeinflussgrößen weitestgehend befreit ist. Dies ermöglicht eine sehr präzise Temperaturerfassung mit dem Ergebnis einer ebenfalls sehr präzisen Überhitzungsregelung.

Mit der Erfindung wird des Weiteren vorgeschlagen ein Verfahren zum Betrieb eines Haushaltsgerätes der vorbeschriebenen Art, mit dem mittels der Messeinrichtung die Verdampfereintrittstemperatur, die Verdampferaustrittstemperatur und entweder die Verflüssigereintrittstemperatur, die Verflüssigeraustrittstemperatur oder die Spülwassertemperatur erfasst werden, bei dem mittels der Kalkulationseinrichtung auf Basis der durch die Messeinrichtung erfassten Ist-Temperaturen und vorgebbaren Kennfeldwerten, die den Druckverlust des Verdampfers im bestimmungsgemäßen Betriebsfall repräsentieren, eine Stellgröße ermittelt wird, nach deren Maßgabe die Einstellung des Expansionsventils geregelt wird. Durch diese Art der Regelung/Steuerung stellt sich eine vorgegebene Soll-Überhitzung des Arbeitsmittels ein.

Eine solche Verfahrensdurchführung erbringt die schon vorstehend zum erfindungsgemäßen Haushaltsgerät angegebenen Vorteile.

Weitere Merkmale und Vorteile der Erfindung ergeben sich aus der nachfolgenden Beschreibung anhand der Figuren. Dabei zeigen

Fig. 1      in schematischer Darstellung den Grundaufbau einer erfindungsgemäßen Geschirrspülmaschine;

Fig. 2      in schematischer Ausschnittsdarstellung die erfindungsgemäße Geschirrspülmaschine gemäß einer ersten Ausführungsform;

Fig. 3      in schematischer Ausschnittsdarstellung die erfindungsgemäße Geschirrspülmaschine gemäß einer zweiten Ausführungsform; und

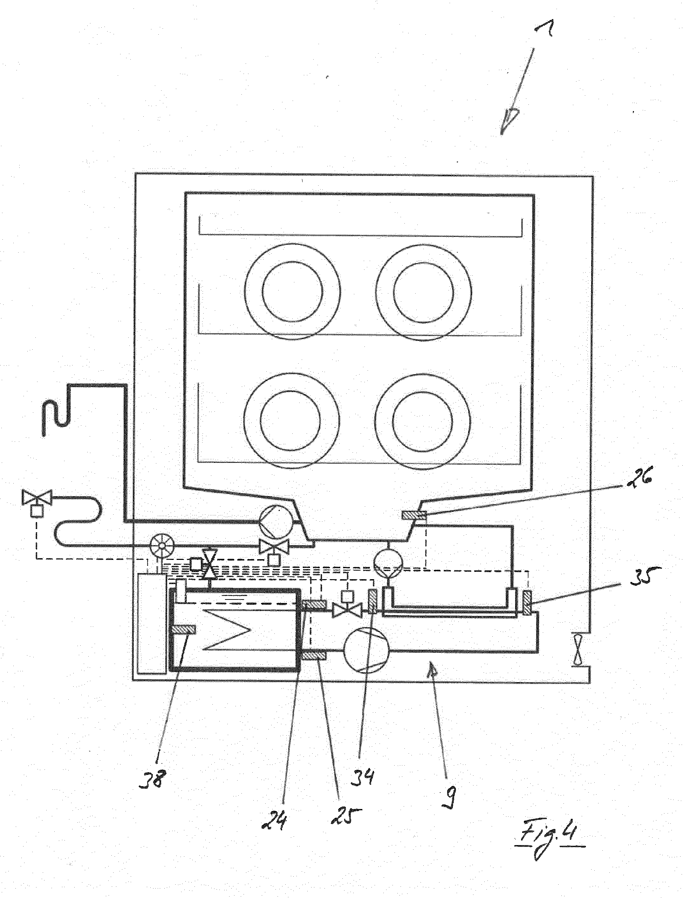

Fig. 4      in schematischer Darstellung eine erfindungsgemäße Geschirrspülmaschine gemäß der zweiten Ausführungsform nach Fig. 3.

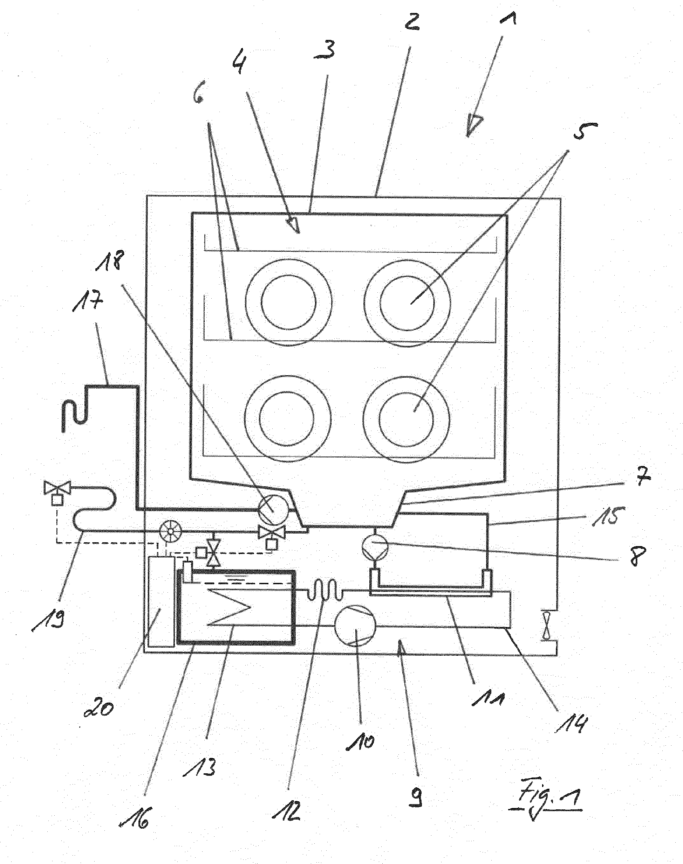

Fig. 1 lässt in schematischer Darstellung den grundsätzlichen Aufbau eines erfindungsgemäßen Haushaltsgerätes anhand einer Geschirrspülmaschine 1 erkennen.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Geschirrspülmaschine 1 der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist.

Im gezeigten Ausführungsbeispiel dienen zur Aufnahme des zu reinigenden Spülguts 5 Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an den eine Umwälzpumpe 8 strömungstechnisch angeschlossen ist. Über entsprechende und in der Figur ebenfalls nicht näher dargestellte Versorgungsleitungen ist die Sprüheinrichtung an die Umwälzpumpe 8 strömungstechnisch angeschlossen. Zudem ist der Sammeltopf 7 unter Zwischenschaltung einer Pumpe 18 an eine Abwasserleitung 17 und an eine Frischwasserleitung 19 strömungstechnisch angeschlossen.

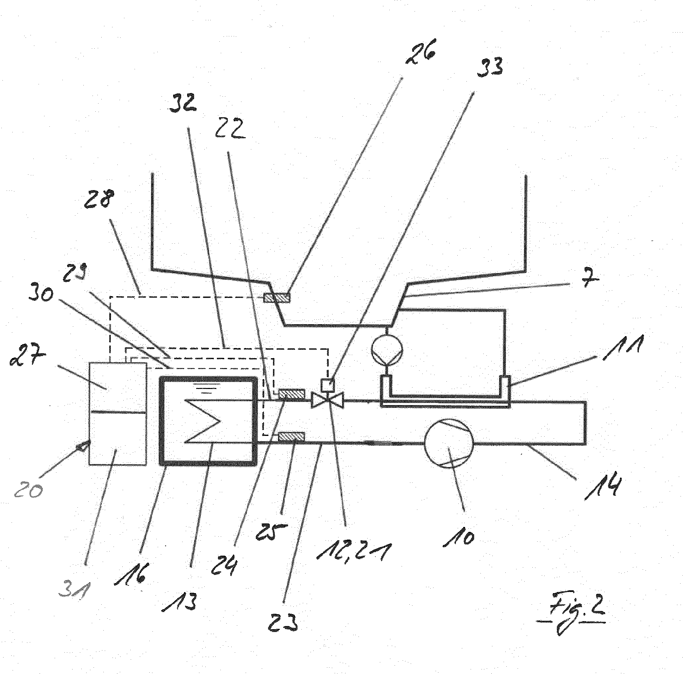

Die Geschirrspülmaschine 1 verfügt des Weiteren über eine Wärmepumpeneinrichtung 9. Diese weist einen Verdichter 10, einen Verflüssiger 11, ein Expansionsorgan 12 in Form eines elektronischen Expansionsventils 21 (Fig. 2), einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit Wasser als Wärmeträgermedium befüllt ist. Damit ist die Wärmepumpeneinrichtung 9 als sogenannte Wasser-Wasser-Wärmepumpeneinrichtung ausgebildet.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 umgewälzten Arbeitsmedium auf die Spülflotte statt. Zu diesem Zweck ist ein an die Umwälzpumpe 8 angeschlossener Umwälzkreislauf 15 vorgesehen, der der Spülflottenumwälzung dient. Die im Betriebsfall im Verflüssiger 11 durch Verflüssigung des Arbeitsmediums frei werdende Wärmeenergie wird mithin auf die im Umwälzkreislauf 15 umgewälzte Spülflotte übertragen, zu welchem Zweck der Verflüssiger 11 über einen entsprechend ausgebildeten Wärmetauscher verfügt.

Wie eine Zusammenschau der Figuren 1 und 2 erkennen lässt, verfügt der Strömungskreislauf 14 über eine Mehrzahl von Rohrleitungen, wobei zwischen zwei benachbarten Baukomponenten der Wärmepumpeneinrichtung 9 jeweils eine Rohrleitung angeordnet ist, mittels welcher beiden Baukomponenten strömungstechnisch miteinander verbunden sind. Und so ist in Strömungsrichtung des Arbeitsmediums zwischen dem Expansionsventil 21 und dem Verdampfer 13 eine erste Rohrleitung 22 und zwischen dem Verdampfer 13 und dem Verdichter 10 eine zweite Rohrleitung 23 angeordnet.

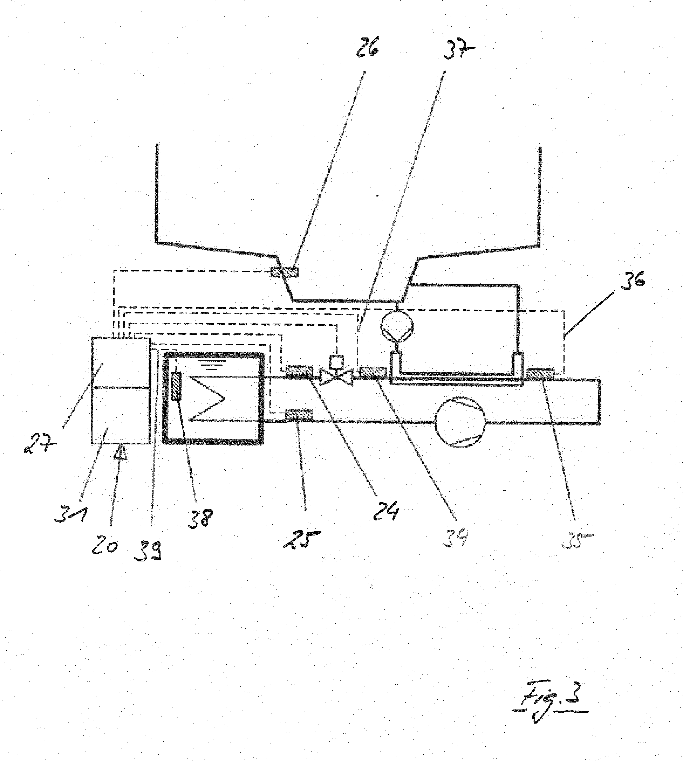

Es ist des Weiteren noch eine Regelungseinrichtung 20 vorgesehen. Diese verfügt über eine Messeinrichtung 27 sowie über eine Kalkulationseinheit 31, wie dies insbesondere die Darstellungen nach den Figuren 2 und 3 erkennen lassen.

Die Messeinrichtung 27 ist erfindungsgemäß drucksensorfrei ausgebildet und verfügt ausschließlich über Temperatursensoren, die jeweils in kommunikationstechnischer Verbindung mit der Regelungseinrichtung 20 stehen. Die Figuren 2 und 3 lassen diesbezüglich zwei unterschiedliche Ausführungsbeispiele erkennen.

Gemäß dem Ausführungsbeispiel nach Fig. 2 sind insgesamt drei Temperatursensoren vorgesehen, nämlich ein erster Temperatursensor 24, ein zweiter Temperatursensor 25 und ein dritter Temperatursensor 26. All die Temperatursensoren stehen in kommunikationstechnischer Verbindung mit der Regelungseinrichtung 20, wobei bezüglich des ersten Temperatursensors 24 die kommunikationstechnische Verbindung 29, bezüglich des zweiten Temperatursensors 25 die kommunikationstechnische Verbindung 30 und bezüglich des dritten Temperatursensors 26 die kommunikationstechnische Verbindung 28 vorgesehen sind.

Der erste Temperatursensor 24 ist außenseitig der ersten Rohrleitung 22 an der ersten Rohrleitung 22 angeordnet. Er dient der Erfassung der Verdampfereintrittstemperatur.

Der zweite Temperatursensor 25 ist außenseitig der zweiten Rohrleitung 23 an der zweiten Rohrleitung 23 angeordnet, und zwar ausgangsseitig des Verdampfers 13. Damit dient der zweite Temperatursensor 25 der Erfassung der Verdampferaustrittstemperatur.

Der dritte Sensor 26 ist innerhalb des Sammeltopfes 7 der Geschirrspülmaschine angeordnet und dient dazu, die Spülwassertemperatur zu erfassen.

Gemäß der zweiten Ausführungsform nach Fig. 3 sind in Ergänzung zu den schon genannten Temperatursensoren 24, 25 und 26 drei weitere Temperatursensoren vorgesehen, nämlich die Temperatursensoren 34, 35 und 38. Diese Temperatursensoren 34, 35 und 38 stehen ebenfalls in kommunikationstechnischer Verbindung mit der Regelungseinrichtung 20, zu welchem Zweck die kommunikationstechnischen Verbindungen 36, 37 und 39 vorgesehen sind.

Die Temperatursensoren 34 und 35 sind in Strömungsrichtung des Arbeitsmediums dem Verflüssiger 11 vor- und nachgeschaltet, womit sie dazu dienen, die Verflüssigereintrittstemperatur bzw. die Verflüssigeraustrittstemperatur zu erfassen.

Der Temperatursensor 38 ist innerhalb des Tanks 16 des Verdampfers 13 angeordnet und dient der Erfassung der Verdampfertanktemperatur.

Gemäß beiden Ausführungsformen wirkt das Expansionsventil mit einem Stellglied 33 zusammen, bei dem es sich beispielsweise um einen Stellmotor handeln kann. Auch das Stellglied 33 steht in kommunikationstechnischer Verbindung mit der Regelungseinrichtung 20, und zwar mittels der kommunikationstechnischen Verbindung 32.

Im bestimmungsgemäßen Betrieb der Wärmepumpeneinrichtung 9 werden durch die Temperatursensoren 24, 25 und 26 bzw. 24, 25, 26, 34, 35 und 38 die momentanen Ist-Temperaturen ermittelt und als Eingangsgröße der Regelungseinrichtung 20 zugeführt. Diese kalkuliert mittels der Kalkulationseirichtung 31 auf Basis der erfassten Ist-Temperaturen und vorgebbaren Kennfeldwerten, die den Druckverlust des Verdampfers 13 im bestimmungsgemäßen Betriebsfall repräsentieren, eine Stellgröße, nach deren Maßgabe die Einstellung des Expansionsventils 21 mittels des Stellglieds 33 geregelt wird, so dass sich eine vorgegebene Soll-Überhitzung des Arbeitsmittels einstellt. Es ist so eine Überhitzungsregelung ermöglicht, ohne eine Druckmessung vornehmen zu müssen, womit die erfindungsgemäße Ausgestaltung ohne entsprechenden Drucksensor in vorteilhafter Weise auskommt.

Die Überhitzungsregelung erfolgt bevorzugterweise wie folgt:

Im Folgenden meint
Führungsgröße:

- Soll-Überhitzung: dt02hs

Eingangsgrößen:

- Verdampfertanktemperatur: tTank
- Verdampfereintrittstemperatur: t01
- Verdampferaustrittstemperatur: t02h
- Spülwassertemperatur: tSPW

In der Regelungseinrichtung 20 findet eine Verarbeitung wie folgt statt:

$$dtreg = dt02h - dt02hs,$$

worin

dtreg = Regelabweichung,
dt02h = reale Ist-Überhitzung und
dt02hs = Soll-Überhitzung

wobei

$$dt02h = t02h - t0$$

worin

dt02h = reale Ist-Überhitzung
t02h = Verdampferaustrittstemperatur und
t0 = Verdampfungstemperatur

wobei

$$t0 = t01 - dt0pv,$$

worin

t0 = Verdampfungstemperatur,
t01 = Verdampfereintrittstemperatur und
dt0pv = Temperaturabsenkung durch Druckverlust

Die Temperaturabsenkung durch Druckverlust ist abhängig von der Temperatur zu Beginn eines bestimmungsgemäßen Betriebs der Wärmepumpeneinrichtung 9, der Verdampfereintrittstemperatur und der Spülwassertemperatur in Entsprechung der nachfolgenden Formel

$$dt0pv = f(tTank, t01, tSPW),$$

worin

tTank = Verdampfertanktemperatur,
t01 = Verdampfereintrittstemperatur und
tSPW = Spülwassertemperatur.

Für diese Größen (tTank, t01, tSPW) müssen Messreihen erstellt werden, so dass alle denkbaren Betriebspunkte erfasst sind. Diese Werte werden in der Regelungseinrichtung 20, d.h. genauer in der Kalkulationseinrichtung 31 als Kennfeldwerte hinterlegt. Je nach dem jeweiligen Ist-Wert im Betrieb der Wärmepumpeneinrichtung 9 wird ein entsprechender Wert für die Temperaturabsenkung durch den Druckverlust im Verdampfer 13 ausgewählt. Somit lässt sich die Regelabweichung der Überhitzungsregelung berechnen. Je nach Größe dieser Abweichung wird eine entsprechende Stellgröße gesetzt, wonach das Stellglied 33 des elektronischen Expansionsventils 21 das Expansionsventil 21 entsprechend auf- oder zufährt.

Durch die Verwendung eines elektronischen Expansionsventils 21 in Kombination mit ausschließlich Temperatursensoren zur Erfassung der Eingangsgrößen der Überhitzungsregelung ergeben sich folgende Vorteile:

- Das elektronische Expansionsventil 21 kann gezielt auf- oder zugefahren werden, was einen schnelleren Druckausgleich während einer kurzen Stillstandsphase der Wärmepumpeneinrichtung 9 ermöglicht, womit die Wärmepumpeneinrichtung 9 früher wieder in Betrieb genommen werden kann.

- Die Verwendung von Temperatursensoren ist eine kostengünstigere Alternative im Vergleich zum Einsatz eines Drucksensors,

- die Temperatursensoren können als Anlegefühler an die Rohrleitungen des Strömungskreislaufes 14 angebracht werden. Fehlerhafte Temperatursensoren können deshalb mit einem sehr geringen Aufwand ausgetauscht werden, wodurch die Wärmepumpeneinrichtung 9 insgesamt reparaturfreundlicher ist. Im Falle eines defekten Drucksensors ist ein Reparaturaufwand um ein Vielfaches größer, da das Arbeitsmedium aus dem Strömungskreislauf 14 komplett abgelassen und nach einem Austausch des Drucksensors wieder aufgefüllt werden muss.

Bezugszeichen

1    Geschirrspülmaschine
2    Gehäuse

3     Spülbehälter
4     Spülraum
5     Spülgut
6     Spülkorb
7     Sammeltopf
8     Umwälzpumpe
9     Wärmepumpeneinrichtung
10    Verdichter
11    Verflüssiger
12    Expansionsorgan
13    Verdampfer
14    Strömungskreislauf (der Wärmepumpeneinrichtung)
15    Umwälzkreislauf (Spülflotte)
16    Tank
17    Abwasserleitung
18    Pumpe
19    Frischwasserleitung
20    Regelungseinrichtung
21    elektronisches Expansionsventil
22    erste Rohrleitung
23    zweite Rohrleitung
24    erster Temperatursensor
25    zweiter Temperatursensor
26    dritter Temperatursensor
27    Messeinrichtung
28    kommunikationstechnische Verbindung
29    kommunikationstechnische Verbindung
30    kommunikationstechnische Verbindung
31    Kalkulationseinheit
32    kommunikationstechnische Verbindung
33    Stellglied
34    Temperatursensor
35    Temperatursensor
36    kommunikationstechnische Verbindung
37    kommunikationstechnische Verbindung
38    Temperatursensor
39    kommunikationstechnische Verbindung

**Patentansprüche**

1. Wasserführendes Haushaltsgerät, insbesondere Geschirrspülmaschine (1), mit einem einen Spülraum (4) bereitstellenden Spülbehälter (3) zur Aufnahme von zu reinigendem Spülgut (5) und einer Wärmepumpeneinrichtung (9), die einen Verdampfer (13), einen Verdichter (10), einen Verflüssiger (11), ein Expansionsorgan (12) und einen diese Baukomponenten (10, 11, 12, 13) strömungstechnisch miteinander verbindenden Strömungskreislauf (14) aufweist, wobei in dem Strömungskreislauf (14) ein Arbeitsmedium geführt ist, **dadurch gekennzeichnet, dass** das Expansionsorgan (12) ein elektronisches Expansionsventil (21) ist, das mit einer Regelungseinrichtung (20) zusammenwirkt, mittels der eine Überhitzung des Arbeitsmediums regelbar ist, wobei die Regelungseinrichtung (20) eine Messeinrichtung (27) aufweist, die drucksensorfrei ausgebildet ist und, insbesondere ausschließlich, über Temperatursensoren (24, 25, 26, 34, 35, 38) verfügt, wobei ein erster Temperatursensor (24) zur Erfassung der Verdampfereintrittstemperatur, ein zweiter Temperatursensor (25) zur Erfassung der Verdampferaustrittstemperatur und ein dritter Temperatursensor (26, 34, 35) zur Erfassung der Verflüssigereintrittstemperatur, der Verflüssigeraustrittstemperatur oder der Spülwassertemperatur vorgesehen ist.

2. Haushaltsgerät nach Anspruch 1,
**dadurch gekennzeichnet, dass**
die Messeinrichtung (27) einen vierten Temperatursensor (38) zur Erfassung der Verdampfertanktemperatur aufweist.

3. Haushaltsgerät nach Anspruch 2,
**gekennzeichnet durch**
einen Temperatursensor (24), der als erster und als vierter Temperatursensor dient, mittels dem die Verdampfereintrittstemperatur und die Verdampfertanktemperatur erfassbar sind,
oder durch
einen Temperatursensor (25), der als zweiter und als vierter Temperatursensor dient, mittels dem die Verdampferaustrittstemperatur und die Verdampfertanktemperatur erfassbar sind.

4. Haushaltsgerät nach einem der vorhergehenden Ansprüche,
**dadurch gekennzeichnet, dass**
die Regelungseinrichtung (20) eine Kalkulationseinrichtung (31) aufweist, mittels welcher auf Basis von mittels der Messeinrichtung (27) erfassten Ist-Temperaturen und vorgebbaren Kennfeldwerten, welche den Druckverlust des Verdampfers (13) im bestimmungsgemäßen Betriebsfall repräsentieren, eine Stellgröße zur Einstellung des Expansionsventils kalkulierbar ist.

5. Haushaltsgerät nach einem der vorhergehenden Ansprüche,
**dadurch gekennzeichnet, dass**
das mindestens ein Temperatursensor (24, 25) thermisch isoliert ist.

6. Haushaltsgerät nach einem der vorhergehenden Ansprüche,
**dadurch gekennzeichnet, dass**
eine vom Expansionsventil (21) zum Verdampfer (13) führende erste Rohrleitung (22) des Strömungskreislaufes (14) ein erstes thermisches Isolationselement aufweist.

7. Haushaltsgerät nach Anspruch 6,
**dadurch gekennzeichnet, dass**
das erste Isolationselement als Rohrabschnitt der ersten Rohrleitung (22) ausgebildet ist.

8. Haushaltsgerät nach Anspruch 6 oder 7, **dadurch gekennzeichnet, dass** die erste Rohrleitung (22) aus einem ersten Material und das erste Isolationselement aus einem zweiten Material gebildet sind, wobei das zweite Material einen im Vergleich zum ersten Material geringeren Wärmeleitkoeffizienten aufweist.

9. Haushaltsgerät nach einem der vorhergehenden Ansprüche, **dadurch gekennzeichnet, dass** eine vom Verdampfer (13) zum Verdichter (10) führende zweite Rohrleitung (23) des Strömungskreislaufes (14) ein zweites thermisches Isolationselement aufweist.

10. Haushaltsgerät nach Anspruch 9, **dadurch gekennzeichnet, dass** das zweite Isolationselement als Rohrabschnitt der zweiten Rohrleitung (23) ausgebildet ist.

11. Haushaltsgerät nach Anspruch 9 oder 10, **dadurch gekennzeichnet, dass** die zweite Rohrleitung (23) aus einem ersten Material und das zweite Isolationselement aus einem zweiten Material gebildet sind, wobei das zweite Material einen im Vergleich zum ersten Material geringeren Wärmeleitkoeffizienten aufweist.

12. Haushaltsgerät ach einem der vorhergehenden Ansprüche, **dadurch gekennzeichnet, dass** das erste Material der ersten Rohrleitung (22) und/oder der zweiten Rohrleitung (23) Kupfer oder Aluminium ist.

13. Haushaltsgerät nach einem der vorhergehenden Ansprüche, **dadurch gekennzeichnet, dass** das zweite Material des ersten Isolationselementes und/oder des zweiten Isolationselements Edelstahl oder Kunststoff ist.

14. Verfahren zum Betrieb eines Haushaltsgerätes nach einem der vorhergehenden Ansprüche 1 bis 13, bei dem mittels der Messeinrichtung (27) die Verdampfereintrittstemperatur, die Verdampferaustrittstemperatur und entweder die Verflüssigereintrittstemperatur, die Verflüssigeraustrittstemperatur oder die Spülwassertemperatur erfasst werden, bei dem mittels der Kalkulationseinrichtung (31) auf Basis der durch die Messeinrichtung (27) erfassten Ist-Temperaturen und vorgebbaren Kennfeldwerten, die den Druckverlust des Verdampfers (13) im bestimmungsgemäßen Betriebsfall repräsentieren, eine Stellgröße ermittelt wird, nach deren Maßgabe die Einstellung des Expansionsventils (21) geregelt wird, so dass sich eine vorgegebene Soll-Überhitzung des Arbeitsmittels einstellt.

Fig. 1

Fig. 2

26    37

36

27

31    38

20  39    25    24    34    35

Fig. 3

Fig.4

Europäisches
Patentamt

European
Patent Office

Office européen
des brevets

**EUROPÄISCHER RECHERCHENBERICHT**

Nummer der Anmeldung

EP 21 15 0359

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/280736 A1 (LEE YONGJU [KR] ET AL) 17. November 2011 (2011-11-17) | 1-5,14 | INV. A47L15/42 |
| Y | * Zusammenfassung * * Absätze [0007], [0010], [0011], | 6,8,9, 11-13 | |
| A | [0028], [0044], [0069] - [0089], [0108] - [0110]; Abbildungen * ----- | 7,10 | ADD. D06F39/00 |
| Y | DE 10 2008 054835 A1 (BSH BOSCH SIEMENS HAUSGERAETE [DE]) 1. Juli 2010 (2010-07-01) * Zusammenfassung * * Absätze [0020] - [0023]; Abbildung * ----- | 6,8,9, 11-13 | |
| X | JP 2014 054377 A (SHARP KK) 27. März 2014 (2014-03-27) | 1-5,14 | |
| A | * Zusammenfassung * * Absätze [0006], [0053], [0064] - [0072], [0080] - [0082], [0098] - [0100], [0141], [0142]; Abbildungen 1,2 * ----- | 6-13 | |
| X | DE 10 2013 111497 A1 (LG ELECTRONICS INC [KR]) 24. April 2014 (2014-04-24) | 1,5 | RECHERCHIERTE SACHGEBIETE (IPC) A47L |
| Y | * Zusammenfassung * | 4,14 | D06F |
| A | * Absätze [0002], [0016], [0020] - [0025], [0058], [0065] - [0066], [0069] - [0075], [0092], [0093]; Abbildungen 1-3 * ----- | 2,3,6-13 | |
| Y | DE 43 03 533 A1 (STIEBEL ELTRON GMBH & CO KG [DE]) 11. August 1994 (1994-08-11) * das ganze Dokument * ----- | 4,14 | |

-/--

Der vorliegende Recherchenbericht wurde für alle Patentansprüche erstellt

| Recherchenort | Abschlußdatum der Recherche | Prüfer |
|---|---|---|
| München | 25. Juni 2021 | Prosig, Christina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 21 15 0359

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 728 052 A1 (ELECTROLUX HOME PROD CORP [BE]) 7. Mai 2014 (2014-05-07) * Zusammenfassung * * Absätze [0001], [0108], [0109] - [0115], [0129], [0139], [0148], [0149]; Abbildungen * ----- | 1-5,14 | |
| A | EP 3 019 655 A1 (ELECTROLUX APPLIANCES AB [SE]) 18. Mai 2016 (2016-05-18) * Absätze [0001], [0037], [0055], [0064], [0065] * ----- | 1-5,14 | |
| A | US 2016/160428 A1 (LEE YONGJU [KR] ET AL) 9. Juni 2016 (2016-06-09) * Zusammenfassung * * Absätze [0059], [0060], [0074] - [0082]; Ansprüche 1,7,8,11; Abbildungen * ----- | 1-5,14 | |
| A | DE 10 2016 220284 A1 (HANGZHOU SANHUA HOME APPLIANCE THERMAL MAN SYSTEM CO LTD [CN]) 20. April 2017 (2017-04-20) * Ansprüche 1,9,17; Abbildungen 1,2 * ----- | 1-5,14 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 25. Juni 2021 | Prosig, Christina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT**
**ÜBER DIE EUROPÄISCHE PATENTANMELDUNG NR.**

EP 21 15 0359

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2021

| Im Recherchenbericht angeführtes Patentdokument | Datum der Veröffentlichung | Mitglied(er) der Patentfamilie | Datum der Veröffentlichung |
|---|---|---|---|
| US 2011280736 A1 | 17-11-2011 | AU 2011245856 A1<br>CN 102762791 A<br>EP 2565323 A2<br>US 2011280736 A1<br>WO 2011136593 A2 | 06-09-2012<br>31-10-2012<br>06-03-2013<br>17-11-2011<br>03-11-2011 |
| DE 102008054835 A1 | 01-07-2010 | KEINE | |
| JP 2014054377 A | 27-03-2014 | JP 6013095 B2<br>JP 2014054377 A | 25-10-2016<br>27-03-2014 |
| DE 102013111497 A1 | 24-04-2014 | CN 103774400 A<br>DE 102013111497 A1<br>FR 2997098 A1<br>GB 2507194 A<br>KR 20140050981 A<br>US 2014109322 A1 | 07-05-2014<br>24-04-2014<br>25-04-2014<br>23-04-2014<br>30-04-2014<br>24-04-2014 |
| DE 4303533 A1 | 11-08-1994 | KEINE | |
| EP 2728052 A1 | 07-05-2014 | EP 2728052 A1<br>EP 3170935 A1<br>PL 2728052 T3 | 07-05-2014<br>24-05-2017<br>31-08-2017 |
| EP 3019655 A1 | 18-05-2016 | EP 3019655 A1<br>WO 2015003742 A1 | 18-05-2016<br>15-01-2015 |
| US 2016160428 A1 | 09-06-2016 | CN 105671904 A<br>EP 3031975 A1<br>US 2016160428 A1 | 15-06-2016<br>15-06-2016<br>09-06-2016 |
| DE 102016220284 A1 | 20-04-2017 | CN 106592185 A<br>DE 102016220284 A1 | 26-04-2017<br>20-04-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2682039 A1
- EP 2206824 A2